(19) Europäisches Patentamt European Patent Office Office européen des brevets

(11) **EP 3 696 253 B1**

(12) **EUROPEAN PATENT SPECIFICATION**

(45) Date of publication and mention
of the grant of the patent:
**21.04.2021  Bulletin 2021/16**

(51) Int Cl.:
***C10L 5/14*** *(2006.01)*  ***C10L 5/36*** *(2006.01)*
***C10L 5/44*** *(2006.01)*

(21) Application number: **19156587.8**

(22) Date of filing: **12.02.2019**

(54) **PROCESS FOR IMPROVING STRUCTURAL INTEGRITY OF HARDWOOD BLACK PELLETS**

VERFAHREN ZUR VERBESSERUNG DER STRUKTURELLEN INTEGRITÄT VON HARTHOLZ-SCHWARZPELLETS

PROCÉDÉ PERMETTANT D'AMÉLIORER L'INTÉGRITÉ STRUCTURALE DE GRANULÉS DE BOIS DUR NOIR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.08.2020  Bulletin 2020/34**

(73) Proprietor: **VALMET AB**
**851 94 Sundsvall (SE)**

(72) Inventors:
• **SJÖBLOM, Krister**
**856 34 Sundsvall (SE)**
• **LAMBERT, Francois**
**854 60 Sundsvall (SE)**
• **ERIXON, Mattias**
**871 93 Härnösand (SE)**
• **BJÖRKLUND, Peter**
**907 37 Umeå (SE)**
• **AVERHEIM, Andreas**
**855 90 Sundsvall (SE)**

(74) Representative: **Maiwald Patent- und Rechtsanwaltsgesellschaft mbH**
**Elisenhof**
**Elisenstraße 3**
**80335 München (DE)**

(56) References cited:
**WO-A1-2014/204519**

• **AMIT KUMAR BISWAS ET AL: "Steam pretreatment ofto upgrade biomass fuel for wood pellet production", FUEL PROCESSING TECHNOLOGY, ELSEVIER BV, NL, vol. 92, no. 9, 11 April 2011 (2011-04-11) , pages 1711-1717, XP028225676, ISSN: 0378-3820, DOI: 10.1016/J.FUPROC.2011.04.017 [retrieved on 2011-04-15]**

## Description

The present invention relates to a process for producing steam exploded hardwood black pellets by combining hardwood material and a source of glue of wood origin, subjecting the combined material to heat pretreatment and steam explosion whereby glue is formed from the source of glue, and the use of said glue for reducing energy consumption during pelleting of the combined heat pretreated steam exploded material and for increasing the structural integrity of the finished steam exploded hardwood black pellets.

## Background art

Coal is commonly burned in power plants to produce heat and electricity. Renewable energy and carbon emissions reduction policies in Japan, South Korea, Canada, Western Europe, and other nations support the use of pelletized biomass fuel as a substitute for coal in power plants. Traditionally produced so-called "white" biomass pellets, made from e.g. sawdust or ground wood compressed in a pellet mill, are available and abundant and therefore could be readily used as partial substitute for coal in power stations. However, transport of white pellets still raises challenges due to their risk of self-heating and risk of dust explosions, significant release of off-gases and poor water resistance and the tendency to rot which complicates handling, transport and storage.

An alternative is "black pellets", which solve some of the problems associated with white pellets. Black pellets feature higher water resistance and thus can be stored, loaded and unloaded in wet weather conditions. They are also cheaper to ship than white pellets because less protection is needed. Further, black pellets have a higher energy density, which can lead to savings of as much as 30 % on transport and logistics. Black pellets are produced in processes such as torrefaction or steam explosion as described e.g. in WO 2013/191897 A1, WO 2015/185751 A1, WO 2017/089648 A1 and EP 3 205 707 A1.

Today, commercial steam exploded black pellet plants use softwood as main source for black pellets. Steam exploded pellets made of softwood are strong and durable, have a high wet durability and have a low tendency to form dust. The production of black pellets of softwood by the steam explosion process resembles the Mason process for the production of wood-based board (US 1,578,609) in that no addition of glue is required for binding the wood particles together.

Biswas et al., Steam pretreatment of Salix to upgrade biomass fuel for wood pellet production, Fuel Processing Technology, 92 (2011) p. 1711-1717, discloses steam explosion experiments using chips of short rotation willow (Salix) for producing steam exploded hardwood black pellets under laboratory conditions.

Pilot plant trials have shown that steam exploded black pellets produced from hardwood, such as European oak, show poor mechanical properties, break easily and produce dust so that the utilization of certain types of hardwood as sources for steam exploded black pellets is limited. One reason for these problems is that the steam exploded oak material sticks to the surface of the pellet press and rips off the pellet surface leading to pellets with a non-cylindrical cross section. Poor mechanical integrity of the hardwood pellets contributes to the problem. Eventually the die of the pellet press is plugged leading to higher energy consumption. The non-uniform steam exploded black pellets of hardwood show poor mechanical properties, break easily and produce dust.

Thus, there is a need in the art for a process for producing steam exploded hardwood black pellets with improved integral stability, which show good mechanical properties. Thereby, the energy consumption during pelleting should be decreased.

It has surprisingly been found that when combining the hardwood raw material with a source of glue of wood origin before steam explosion, hardwood black pellets can be produced with high integral stability and good mechanical properties. The glue is formed as a reaction product catalyzed by the prevailing reaction conditions in the steam explosion reactor. Sticking and plugging of the combined material in the pellet mill is significantly reduced so that also the energy consumption is reduced.

## Summary of the invention

The present invention relates to a process for producing hardwood black pellets comprising the steps of

    a) Providing hardwood material;
    b) Combining the hardwood material with a source of glue of wood origin;
    c) Subjecting the combined hardwood material and source of glue to heat pretreatment to form a glue;
    d) Subjecting the heat pretreated hardwood material and formed glue to steam explosion;
    e) Pelleting the steam exploded hardwood material and formed glue to hardwood black pellets.

Further, the present invention relates to the use of a source of glue of wood origin for reducing energy consumption during pelleting of steam exploded hardwood material to black pellets, wherein the source of glue of wood origin is combined with the hardwood material before steam explosion.

Still further, the present invention relates to the use of a source of glue of wood origin for increasing the structural integrity of steam exploded hardwood black pellets, wherein the source of glue of wood origin is combined with the hardwood material before steam explosion.

**Definitions**

Hardwood is wood from dicot trees which are angiosperm trees that reproduce by flowers. Hardwoods have a more complex structure than softwoods. Hardwoods contain several cell types, specialized for different functions. The supporting tissue consists mainly of libriform cells, the conducting tissue of vessels with large cavities, and the storage tissue of ray parenchyma cells. In addition, hardwoods contain hybrids of the above-mentioned cells which are classified as fiber tracheids. The dominant feature separating hardwoods from softwoods is the presence of vessels. The vessels may show considerable variation in size, shape of perforation plates (simple, scalariform, reticulate, foraminate), and structure of cell wall, such as spiral thickenings.

Softwood is wood from gymnosperm trees such as conifers. Softwood reproduces using cones and occasionally nuts. The wood substance in softwoods is composed mainly of tracheids (fibers) which constitute 90-95% of the wood volume. The remainder is made up of ray cells. The term "pellet" herein refers to a solid piece of material having a shape of a profile extending in a longitudinal direction. A pellet is typically pressed from finely grained solid material. The size of a single pellet in a direction perpendicular to the longitudinal direction (e.g. the diameter of a circular pellet) may be e.g. from 5 mm to 15 mm, such as from 6 mm to 12 mm. The length of a pellet is typically e.g. from 5 mm to 30 mm.

Black pellets are biomass pellets which are produced through processes like steam explosion or torrefaction. Torrefaction of biomass, e.g. wood or grain, is a mild form of pyrolysis at temperatures typically between 200 °C and 320 °C. Torrefaction changes biomass properties to provide a better fuel quality for combustion and gasification applications. Torrefaction produces a dry product with no biological activity like rotting. Torrefaction combined with densification creates an energy-dense fuel.

In the steam explosion process, the wood raw material is preheated with steam under pressure followed by the step of rapid pressure release during the discharge of the material from the pressurized pretreatment reactor. During the heat pretreatment in the steam atmosphere, the lignocellulosic material is softened and weakened. The polysaccharides - mainly of hemicellulose origin - are hydrolyzed and the lignin is partially depolymerized. Upon the steam explosion discharge, the wood material is broken up into smaller particles, fiber bundles, and even defibrated into separate fibers. The steam exploded material is then compressed together into a stable, solid biofuel in the pelleting process. Steam exploded black pellets can be transported and stored safely, ground and burned together with fossil coal, or even fully replace fossil coal, in coal-fired power plants. The main differences between black pellets and standard white wood pellets are that black pellets have a 30% higher volumetric energy density, are more resistant to biological degradation, are safer to transport and are hydrophobic. Hardwood black pellets means that more than 50 wt% of the composition of the black pellets results from sources of hardwood.

Lignin is a complex three-dimensional network natural polymer that serves as a continuous matrix component in plant cell walls. Ultraviolet microscopy and SEM-EDXA (scanning electron microscopy energy dispersive X-ray) analyses have shown that the distribution of lignin across the wood cells walls are different between softwoods and hardwoods. Softwoods have a high concentration of lignin in the middle lamella, the tissue between individual wood cells, whereas the lignin concentration in hardwood middle lamella is lower. For black spruce and Douglas fir the lignin concentration in the middle lamella is 50-60%, whereas it is 36-40% in white birch (Biosynthesis and Biodegradation of Wood Components, Ed. Higuchi, T., Elsevier, 2012, p. 51-60).

Pseudo-lignin is defined as an aromatic material, a lignin-like polymer made from carbohydrate degradation products that yields a positive Klason lignin value although it is not derived from native lignin. Pseudo-lignin is formed through condensation and polymerization of hydrolysis reaction products of polysaccharide origin with furfural and hydroxymethylfurfural. Through liberation of acetyl groups from the wood hemicelluloses during the steam heating, further autocatalyzed hydrolysis of the carbohydrates takes place which yields precursors for formation of pseudo-lignin. Recent research concludes that pseudo-lignin seems to be a humin-like compound (Aarum, I. et al., ACS Omega 2018, 3, p. 4924-4931).

**Figures**

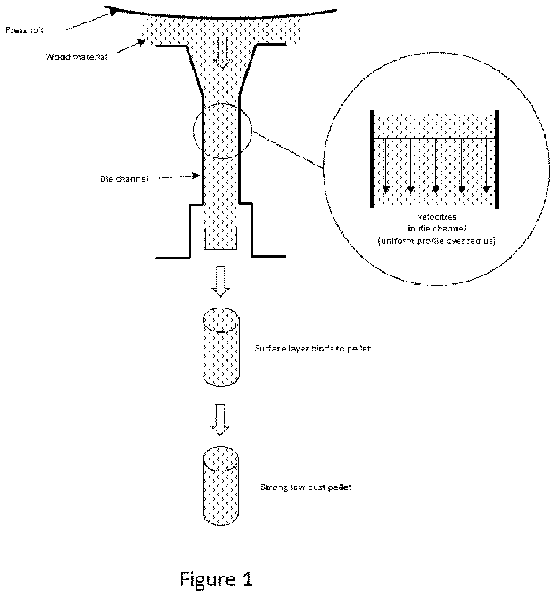

Figure 1 shows steam exploded oak black pellets produced with an additional source of glue. During pelleting uniform pellets with cylindrical cross section and high integral stability and mechanical properties are produced. Sticking and plugging in the pellet press is significantly reduced so that also the energy consumption is reduced.

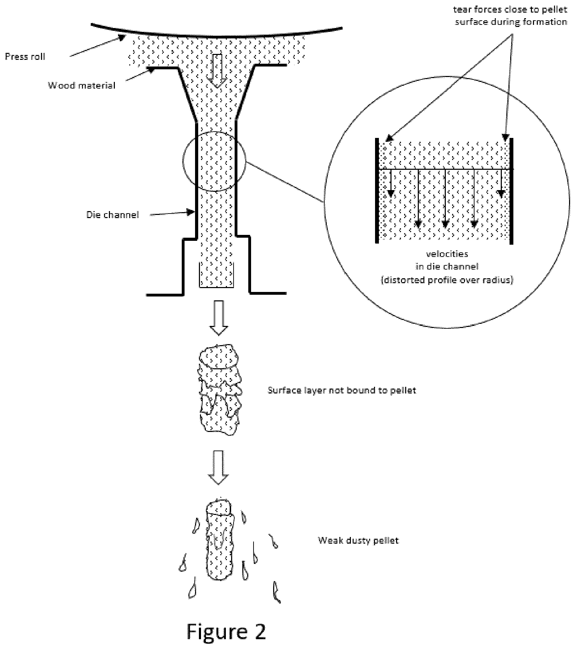

Figure 2 shows steam exploded oak black pellets produced without additional glue. During pelleting, the steam exploded oak material sticks to the surface of the pellet press and causes ripping off of the pellet surface leading to pellets with a non-cylindrical cross section. Eventually, the die of the pellet press is plugged leading to higher energy consumption. The non-uniform black pellets show poor mechanical properties, break easily and produce dust.

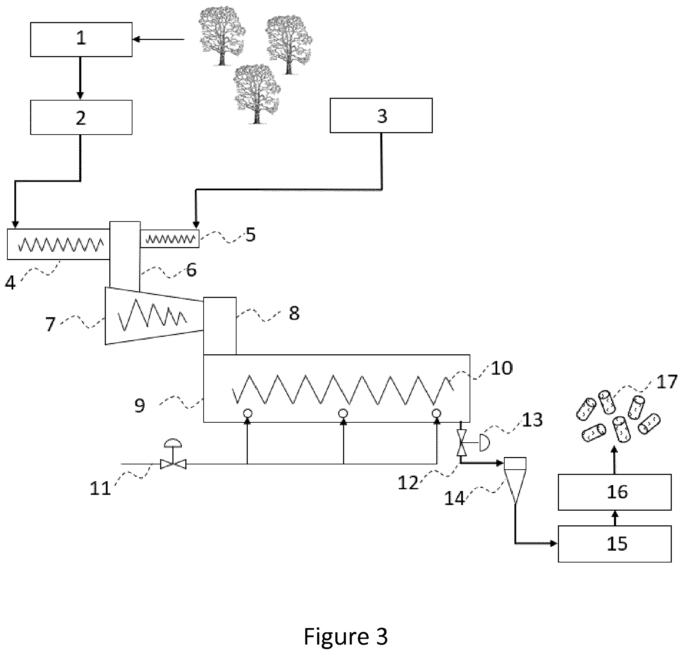

Figure 3 shows a block diagram of the process for producing steam exploded black pellets from hardwood using a source of glue of wood origin for reduced energy consumption during pelleting and improved mechanical properties of the finished pellets.

## Detailed description of the invention

The present invention relates to a process for producing hardwood black pellets comprising the steps of

> a) Providing hardwood material;
> b) Combining the hardwood material with a source of glue of wood origin;
> c) Subjecting the combined hardwood material and source of and glue to heat pretreatment to form a glue;
> d) Subjecting the pretreated hardwood material and formed glue to steam explosion;
> e) Pelleting the steam exploded hardwood material formed glue to hardwood black pellets.

The process of the invention is suitable for producing hardwood black pellets with high integral stability and good mechanical properties made from various kinds of hardwood. Preferably, the hardwood is selected from Salix species, Alnus species, Carpinus species, Populus species, Acer species, Quercus species, Fraxinus species, Betula species, Fagus species, Ulmus species, Catanea species, Robinia species, or mixtures thereof. The process is especially suitable for sources of hardwood which contain hardwood selected from Quercus species, such as European oak.

The source of hardwood can be selected from fresh hardwood or processed hardwood, e.g. residual wood from pulp wood, landscaping, logging or sawmills. Before being combined with the source of glue and subjected to heat pretreatment, the hardwood can be in a fresh state, with a moisture content about 50%, or dried to a moisture content of between about 7% to 13%.

The source of hardwood is preferably selected from chips of hardwood, but also pieces of hardwood having smaller particle sizes than chips of hardwood, e.g. so-called microchips of hardwood can also be used. The chips of hardwood preferably have a size in the range of from 30 mm to 125 mm in their largest dimension, preferably from 50 to 100 mm in their largest dimension. The microchips of hardwood preferably have a size in the range of from 1 mm to 50 mm in their largest dimension, preferably from 5 to 30 mm in their largest dimension. The smallest dimension, typically the thickness of chips or particles of hardwood, may range from 1 mm or less to 25 mm. The chips or microchips of hardwood are preferably formed by cutting, chipping or hammermilling of larger pieces of hardwood such as trees, branches, logging residues, stumps, roots, and wood waste.

The hardwood material is combined with a source of glue of wood origin. It has been found that the integral stability and mechanical properties of the finished hardwood steam exploded black pellets can be significantly increased when the hardwood particles are "glued" together at the same time as the pelleting process runs more smoothly. The glue is preferably generated in situ during heat pretreatment of the hardwood black material and the source of glue.

It is preferred that the glue is selected from pseudo-lignin and/or lignin. Pseudo-lignin is preferably generated during the heat pretreatment of the source of glue by the condensation and polymerization reactions of carbohydrate and possibly lignin degradation products formed during the heat pretreatment before steam explosion. Pseudo-lignin is formed through condensation and polymerization of hydrolysis reactions products with furfural and hydroxymethylfurfural. More specifically, by condensation and polymerization reactions, carbohydrate and possibly lignin degradation moieties form so-called pseudo-lignin which is a tacky compound. The pseudo-lignin and lignin degradation products may be redistributed over all the wood particles, including the hardwood material, during the steam explosion step.

Lignin, mainly in the form of lignin fragments liberated during the heat pretreatment is preferably obtained from the source of glue during the heat pretreatment before the steam explosion step. During the steam explosion step the wood particles from the source of glue are further disintegrated. The wood cells break and part mainly in the middle lamella, which, in the case of the source of glue selected from softwoods, results in particles that to a high extent are covered with middle lamella lignin with the ability to function as a glue between the bulk hardwood particles when the steam exploded material is pelleted.

The source of glue is preferably selected from sawdust of softwood, chips or microchips of softwood, prehydrolysed softwood, sawdust of hardwood, an organic material comprising at least 20 wt% lignin, lignin or mixtures thereof. By prehydrolyzed softwood is understood softwood that has undergone autocatalyzed or acid-catalyzed prehydrolysis with a severity factor log $R_0$ in the range of 3.0 - 5.5. The severity factor $R_0$ is defined as the integral of the factor over time t (min) at the process temperature T (°C) according to the equation:

$$R_0 = t \cdot \exp\left(\frac{T(t) - 100}{14.75}\right)$$

[Chornet, E. and Overend, R., Phenomenological kinetics and reaction engineering aspects of steam/aqueous treatments. Steam Explosion Techniques: Fundamentals and Industrial Applications (1991), p. 21-58].

Lignin can also be obtained from spent cooking liquor from chemical pulping processes, such as the kraft pulping processes as known in the art, e.g. according to the LignoBoost process for separation and extraction of kraft lignin.

It has been found that already low amounts of source of glue are sufficient to significantly increase the integral stability and mechanical properties of the resultant hardwood black pellets. It is preferred that the weight ratio (oven-dry basis) of the hardwood material and the source of glue combined in process step b) is from 99:1 to 75:25, more preferably from 98:2 to 85:15 and most preferably from 95:5 to 90:10.

Preferably, the hardwood material is combined with the source of glue in a means for feeding the biomass to the heat pretreatment. Suitably, the hardwood material and the source of glue are combined by feeding them into a plug screw feeder that feeds the combined material into a pressurized pretreament reactor. Other means of feeding can also be used, e.g. rotating pocket feeders, to feed the hardwood material and the source of glue into a pressurized pretreatment reactor. The plug screw feeder (7 in Figure 3), or any other means for feeding the combined material into the pressurized pretreatment reactor, can in turn be fed by metering screw conveyors (4 and 5 in Figure 3) to achieve the desired proportion between hardwood material and source of glue.

In the pretreatment reactor, the combined hardwood material and source of glue are heated and thermally softened by contact with direct steam. The temperature during the heat pretreatment is preferably in the range of from 150°C to 250°C, more preferably of from 180°C to 230°C. The pressure during the thermal treatment is preferably in the range of from 4 bar(g) to 33 bar(g), more preferably from 5 bar(g) to 30 bar(g) and most preferably from 10 bar(g) to 25 bar(g). Preferably, the combined hardwood material and source of glue are subjected to the heat pretreatment for at least 2 min, such as a time span of from 2 min to 1 hour, preferably for a time span of from 2 min to 30 min, still more preferably for a time span of from 3 min to 15 min.

It has been found in the present invention that due to the high temperature and presence of moisture in the pretreatment reactor, the lignin in the hardwood material and the source of glue is softened. Acetyl groups in the hemicellulose fraction are split off, which lowers the pH of the wood moisture and any liquid phase. Thereby, the hemicelluloses are hydrolyzed and liberated oligosaccharides and monosaccharides undergo further hydrolysis and degradation to various reaction products. The hydrolysis reaction products then undergo condensation and polymerization reactions resulting in formation of pseudo-lignin. Furfural and methylfurfural, that take part in the formation of pseudo-lignin, are formed from degraded saccharides. Combination of the pseudo-lignin with lignin fragments may also take place. Since the source of glue in the form of e.g. sawdust has a smaller particle size than the main hardwood pellet material, heating to reaction temperature is more rapid in the source of glue than in the bulk of the biomass in the pretreatment reactor. A certain severity factor, i.e. a combination of time and temperature for biomass pretreatment reactions, is achieved faster in biomass material that has a small particle size, i.e. in the source of glue, which results in faster and more extensive formation of pseudo-lignin and release of lignin fragments than what do occur in the bulk hardwood material of larger particle sizes. Further, small particles of softwood in the form of sawdust or microchips have a large surface area which in the subsequent disintegration during the steam explosion discharge, where separation mainly occurs in the middle lamellae, will to a high extent be covered by lignin, which contributes to the binding of the hardwood particles in the pellets in the pelleting process.

Preferably after heat pretreatment, the combined hardwood material, source of glue and formed glue are subjected to steam explosion. During the steam explosion step, the hardwood material, source of glue and formed glue are exposed to an environment of lower pressure such as atmospheric pressure. To obtain a suitable degree of steam explosion effect, the decrease of pressure is preferably done rapidly. Typically, the heat pretreated hardwood material, source of glue, formed glue and steam are let out of the pretreatment reactor, whereby the pressure rapidly drops to a lower level, i.e. in less than 5 seconds, more preferably in less than 1 second. Preferably, the heat pretreated hardwood material, source of glue, formed glue and steam are let out of the pretreatment reactor through a blow-valve or orifice suitably into a blow line. Steam can be separated and recovered from the heat pretreated biomass material in a cyclone connected to the blow-line.

Because of the steam explosion, the hardwood material and source of glue disintegrate into smaller particles due to the forces of expanding steam and impact and shear forces when the material passes through the blow valve and blow line. As a consequence, the wood is disintegrated into fiber bundles and even separate fibers.

Usually, upon discharge from the pretreatment reactor, the steam exploded hardwood material and source of glue are disintegrated or defibrated to such an extent that no further grinding is necessary before pelleting. However, in certain embodiments, the process of the invention further comprises the step of grinding the steam exploded hardwood material and source of glue before pelleting.

The heat treated and steam exploded material is preferably cooled to a temperature of below 120°C, or preferably below 100°C before pelleting.

Before pelleting to hardwood black pellets, additives can be added to the steam exploded material. Suitable additives are e.g. fouling-reducing additives that reduce fouling of boiler heat-transfer surfaces during combustion of steam exploded pellets, and/or additives that reduce the corrosion potential of the hardwood material. Fouling-reducing additives can be selected from kaolin, lime stone, dolomite, magnesium carbonate, clay and coal fly ash. The fouling-reducing additives can be added e.g. during heat pretreatment, after steam explosion or in connection with pelleting. Suitable additives are disclosed in WO 2017/089648.

As a final step of the process of the invention, the steam exploded hardwood material and formed glue are pelleted into hardwood black pellets. For pelleting, the steam exploded hardwood material and glue are preferably fed into a pelleting device such as a pellet press or pellet mill. The pelleting device preferably comprises means for pressing the steam exploded hardwood material and formed glue towards an orifice. Said means can comprise a pressure plate and a piston or a screw. The orifice may be arranged in a plate having multiple orifices. When compressed, the steam exploded hardwood material and glue pass through the orifice to form pellets. The orifice or multiple orifices preferably have a circular shape so that the pellets also have a circular shape in the direction perpendicular to the longitudinal direction. Suitably, the pellets are cut in longitudinal direction.

The resulting hardwood black pellets preferably have a size in the direction perpendicular to the longitudinal direction (e.g. the diameter of a circular pellet) of from 5 mm to 15 mm, such as from 6 mm to 12 mm. The length of a pellet is typically e.g. from 5 mm to 30 mm. The hardwood black pellets preferably have a density of from 700 kg/m$^3$ to 1200 kg/m$^3$, more preferably from 800 kg/m$^3$ to 1000 kg/m$^3$.

Figure 1 shows steam exploded oak black pellets produced with additional source of glue. During pelleting, uniform pellets with cylindrical cross section and high integral stability and mechanical properties are produced. Sticking and plugging in the pellet press are significantly reduced so that also the energy consumption is reduced.

In contrast to that, Figure 2 shows steam exploded oak black pellets produced without additional glue or source of glue. During pelleting, the steam exploded oak material sticks to the surface of the pellet press and the pellet surface is peeled off leading to pellets with a non-cylindrical cross section. Eventually, the die of the pellet press becomes plugged leading to higher energy consumption. The non-uniform black pellets show poor mechanical properties, break easily and produce dust.

Thus, it has been surprisingly found that the process according to the present invention is suitable for producing hardwood black pellets, which due to their composition, including formed glue, show a high durability, wet durability, and hardness which facilitates handling, transport and storage from production to combustion as a biofuel. The addition of a source of glue improves the structural integrity and mechanical properties of the hardwood black pellets so that various kinds of hardwoods, including e.g. European oak, can be used as sources of hardwood in the process of the present invention.

Further, the present invention relates to the use of a source of glue of wood origin for reducing energy consumption during pelleting of steam exploded hardwood black pellets, wherein the source of glue of wood origin is combined with the hardwood material before steam explosion.

Still further, the present invention relates to the use of a source of glue of wood origin for increasing the structural integrity of steam exploded hardwood black pellets, wherein the source of glue of wood origin is combined with the hardwood material before steam explosion.

The sources of glue of wood origin and hardwood as well as the hardwood black pellets of the above uses of the present invention are preferably defined as described above or below.

Reference signs in Figure 3

1    hardwood material
2    pieces of hardwood material
3    source of glue of wood origin
4    screw conveyor
5    screw conveyor
6    inlet
7    plug screw feeder
8    inlet
9    pretreatment reactor
10   internal conveyor screw
11   flow-controlled steam piping
12   blow line
13   blow valve
14   cyclone
15   steam exploded hardwood material
16   pelleting plant
17   steam exploded black hardwood pellets

**Detailed description of the process of figure 3**

Figure 3 shows a block diagram of the process for producing steam exploded black pellets from hardwood using a source of glue of wood origin for reduced energy consumption during pelleting and improved mechanical properties of the finished pellets. A hardwood material 1 is provided and is chipped or hammermilled etc. to produce pieces of hardwood material 2 of suitable sizes for heat pre-treatment in a pressurized reactor 9 together with a source of glue 3 of wood origin. The hardwood material 2 and source of glue 3 are fed by metering screw conveyors 4 and 5 which control the feed rates of the hardwood material and source of glue plug screw into the inlet 6 of a plug screw feeder 7. The plug screw feeder 7 feeds the hardwood material and source of glue into the pretreatment reactor 9 through the inlet 8. The plug screw feeder 7 creates a steam-tight plug of the hardwood material 2 and source of glue 3 which seals against the pretreatment reactor pressure. An internal conveyor screw 10 transports the material 2 and 3 though the pretreatment reactor 9. The content of the pre-treatment reactor is heated by direct steam supplied through a flow-controlled steam piping 11 whereby the wood material in the pretreatment reactor is softened and a glue consisting of tacky compound is formed from the source of glue through chemical and physical reactions, i.e. hydrolysis and condensation reactions and release and redistribution of native lignin respectively. The steam pretreated material is subjected to steam explosion upon discharge though a blow line 12 provided with a blow valve 13 (the "explosion" point) for flow control. Steam is separated from the steam exploded material 15, i.e. hardwood material and formed glue, in a cyclone 14. The heat pretreated and steam exploded material 15 is sent to a pelleting plant 16 to produce steam exploded black hardwood pellets 17.

**Claims**

1. A process for producing hardwood black pellets comprising the steps of

   a) Providing hardwood material;
   b) Combining the hardwood material with a source of glue of wood origin;
   c) Subjecting the combined hardwood material and source of glue to heat pretreatment to form a glue;
   d) Subjecting the heat pretreated hardwood material and formed glue to steam explosion;
   e) Pelleting the steam exploded hardwood material and formed glue to hardwood black pellets.

2. The process according to claim 1, wherein the hardwood material is selected from chips of hardwood, hardwood or pieces of hardwood produced by other means of disintegration.

3. The process according to claims 1 or 2, wherein the hardwood material is selected from Salix species, Alnus species, Carpinus species, Populus species, Acer species, Quercus species, Fraxinus species, Betula species, Fagus species, Ulmus species, Catanea species, Robinia species, or mixtures thereof.

4. The process according to any one of the preceding claims, wherein the glue is formed in situ and is mainly composed of pseudo-lignin and/or lignin.

5. The process according to any one of the preceding claims, wherein the source of glue is selected from chips of softwood, sawdust of softwood, prehydrolysed softwood, sawdust of hardwood, an organic material comprising at least 20 wt% lignin, lignin e.g. separated from spent cooking liquor from chemical pulping processes, or mixtures thereof.

6. The process according to any one of the preceding claims, wherein the weight ratio of the hardwood material and the source of glue combined in process step b) is from 99:1 to 75:25 calculated on oven-dry basis.

7. The process according to any one of the preceding claims, wherein the hardwood material has a moisture content about 50% before it is combined with the source of glue.

8. The process according to any one of the preceding claims 1 to 6, wherein the hardwood material is dried to a moisture content of 7 wt% to 13 wt% before it is combined with the source of glue.

9. The process according to any one of the preceding claims, wherein the hardwood material is combined with the source of glue in process step b) in a means for feeding the hardwood material to the heat pretreatment.

10. The process according to any one of the preceding claims, wherein the heat pretreatment in process step c) is conducted at a temperature of 150°C to 250°C and a pressure of 4 to 33 bar(g).

11. The process according to any one of the preceding claims, wherein after steam explosion, the steam exploded hardwood material and formed glue are cooled to a temperature below 120°C before pelleting.

12. The process according to any one of the preceding claims, wherein the hardwood black pellets have a size in the direction perpendicular to the longitudinal direction of from 5 mm to 15 mm.

13. The process according to any one of the preceding claims, wherein the hardwood black pellets have a density of from 700 $kg/m^3$ to 1200 $kg/m^3$.

14. Use of a source of glue of wood origin for reducing energy consumption during pelleting of steam exploded hardwood material to black pellets, wherein the source of glue of wood origin is combined with the hardwood material before steam explosion.

15. Use of a source of glue of wood origin for increasing the structural integrity of steam exploded hardwood black pellets, wherein the source of glue of wood origin is combined with the hardwood material before steam explosion.

**Patentansprüche**

1. Ein Verfahren zur Herstellung von schwarzen Pellets aus Hartholz umfassend die Schritte:

   a) Bereitstellen von Hartholzmaterial;
   b) Vereinigen des Hartholzmaterials mit einer Klebstoffquelle mit Ursprung aus Holz;
   c) Unterziehen des vereinigten Hartholzmaterials und der Klebstoffquelle einer Hitzevorbehandlung, um einen Klebstoff herzustellen;

d) Unterziehen des mit Hitze vorbehandelten Hartholzmaterials und des hergestellten Klebstoffs einer Dampfexplosion;

e) Pelletieren des dampfexplodierten Hartholzmaterials und des hergestellten Klebstoffs zu schwarzen Pellets aus Hartholz.

2. Das Verfahren gemäß Anspruch 1, wobei das Hartholzmaterial ausgewählt ist aus Hartholzschnitzeln, Hartholz, das in einer Hammermühle zerkleinert worden ist, oder Hartholzteile, die mit anderen Zersetzungsmitteln hergestellt worden sind.

3. Das Verfahren gemäß Anspruch 1 oder 2, wobei das Hartholzmaterial ausgewählt ist aus den Pflanzengattungen der Salix, Alnus, Carpinus, Populus, Acer, Quercus, Fraxinus, Betula, Fagus, Ulmus, Catanea, Robinia oder Mischungen daraus.

4. Das Verfahren gemäß einem der vorherigen Ansprüche, wobei der Klebstoff in situ hergestellt wird und vorranging aus Pseudolignin und/oder Lignin zusammengesetzt ist.

5. Das Verfahren gemäß einem der vorherigen Ansprüche, wobei die Klebstoffquelle ausgewählt ist aus Weichholzschnitzeln, Sägemehl aus Weichholz, vorhydrolysiertes Weichholz, Sägemehl aus Hartholz, einem organischen Material, das mindestens 20 Gew.-% Lignin enthält, Lignin, das beispielsweise abgetrennt worden ist von verbrauchter Kochlauge aus chemischen Aufschlussverfahren für die Zellstoffgewinnung, oder Mischungen daraus.

6. Das Verfahren gemäß einem der vorherigen Ansprüche, wobei das Gewichtsverhältnis des Hartholzmaterials zu der Klebstoffquelle, die in Verfahrensschritt b) vereinigt werden, im Bereich von 99:1 zu 75:25 liegt, berechnet auf der Basis der Ofentrockenmasse.

7. Das Verfahren gemäß einem der vorherigen Ansprüche, wobei das Hartholzmaterial einen Feuchtigkeitsgehalt von ungefähr 50 % aufweist, bevor es mit der Klebstoffquelle vereinigt wird.

8. Das Verfahren gemäß einem der Ansprüche 1 bis 6, wobei das Hartholzmaterial bis zu einem Feuchtigkeitsgehalt von 7 Gew.-% bis 13 Gew.-% getrocknet wird, bevor es mit der Klebstoffquelle vereinigt wird.

9. Das Verfahren gemäß einem der vorherigen Ansprüche, wobei das Hartholzmaterial mit der Klebstoffquelle in Verfahrensschritt b) in einem Mittel zum Beschicken des Hartholzmaterials zu der Hitzevorbehandlung vereinigt wird.

10. Das Verfahren gemäß einem der vorherigen Ansprüche, wobei die Hitzevorbehandlung in Verfahrensschritt c) durchgeführt wird bei einer Temperatur von 150°C bis 250°C und einem Druck von 4 bis 33 bar(g).

11. Das Verfahren gemäß einem der vorherigen Ansprüche, wobei nach der Dampfexplosion das dampfexplodierte Hartholzmaterial und der hergestellte Klebstoff vor dem Pelletieren auf eine Temperatur von unter 120°C gekühlt wird.

12. Das Verfahren gemäß einem der vorherigen Ansprüche, wobei die schwarzen Pellets aus Hartholz eine Größe von 5 mm bis 15 mm in der Richtung im rechten Winkel zur Längsrichtung aufweisen.

13. Das Verfahren gemäß einem der vorherigen Ansprüche, wobei die schwarzen Pellets aus Hartholz eine Dichte von 700 kg/m$^3$ bis 1200 kg/m$^3$ aufweisen.

14. Die Verwendung einer Klebstoffquelle mit Ursprung aus Holz zur Verringerung des Energieverbrauchs während des Pelletierens von dampfexplodierten Hartholzmaterials zu schwarzen Pellets aus Hartholz, wobei die Klebstoffquelle mit Ursprung aus Holz mit dem Hartholzmaterial vor der Dampfexplosion vereinigt wird.

15. Die Verwendung einer Klebstoffquelle mit Ursprung aus Holz zur Vergrößerung der strukturellen Integrität von dampfexplodierten schwarzen Pellets aus Hartholz, wobei die Klebstoffquelle mit Ursprung aus Holz mit dem Hartholzmaterial vor der Dampfexplosion vereinigt wird.

**Revendications**

1. Procédé de production de granulés noirs de bois dur comprenant les étapes de

    a) fourniture d'un matériau de bois dur ;
    b) combinaison du matériau de bois dur à une source de colle d'origine bois ;
    c) soumission du matériau de bois dur et de la source de colle combinés à un prétraitement thermique pour former une colle ;
    d) soumission du matériau de bois dur et de la colle formée prétraités thermiquement à une explosion à la vapeur ;
    e) granulage du matériau de bois dur et de la colle formée fragmentés par vapeur en granulés noirs de bois dur.

2. Procédé selon la revendication 1, dans lequel le matériau de bois dur est choisi parmi des copeaux de bois dur, du bois dur broyé ou des morceaux de bois dur produits par d'autres moyens de désintégration.

3. Procédé selon les revendications 1 ou 2, dans lequel le matériau de bois dur est choisi parmi l'espèce Salix, l'espèce Alnus, l'espèce Carpinus, l'espèce Populus, l'espèce Acer, l'espèce Quercus, l'espèce Fraxinus, l'espèce Betula, l'espèce Fagus, l'espèce Ulmus, l'espèce Catanea, l'espèce Robinia, ou des mélanges de celles-ci ;

4. Procédé selon l'une quelconque des revendications précédentes, dans lequel la colle est formée *in situ* et est principalement composée de pseudo-lignine et/ou de lignine.

5. Procédé selon l'une quelconque des revendications précédentes, dans lequel la source de colle est choisie parmi des copeaux de bois tendre, de la sciure de bois tendre, du bois tendre préhydrolysé, de la sciure de bois dur, un matériau organique comprenant au moins 20 % en poids de lignine, de la lignine par exemple séparée de lessive de cuisson usée issue de procédés de réduction en pâte chimique, ou des mélanges de ceux-ci.

6. Procédé selon l'une quelconque des revendications précédentes, dans lequel le rapport en poids entre le matériau de bois dur et la source de colle combinés à l'étape b) de procédé est de 99 : 1 à 75 : 25 calculé sur une base anhydre.

7. Procédé selon l'une quelconque des revendications précédentes, dans lequel le matériau de bois dur a une teneur en humidité d'environ 50 % avant d'être combiné à la source de colle.

8. Procédé selon l'une des revendications 1 à 6 précédentes, dans lequel le matériau de bois dur est séché jusqu'à une teneur en humidité de 7 % en poids à 13 % en poids avant d'être combiné à la source de colle.

9. Procédé selon l'une quelconque des revendications précédentes, dans lequel le matériau de bois dur est combiné à la source de colle à l'étape b) de procédé dans un moyen d'apport du matériau de bois dur au prétraitement thermique.

10. Procédé selon l'une quelconque des revendications précédentes, dans lequel le prétraitement thermique à l'étape c) de procédé est réalisé à une température de 150 °C à 250 °C et une pression de 4 à 33 bar(g).

11. Procédé selon l'une quelconque des revendications précédentes, dans lequel après explosion à la vapeur, le matériau de bois dur et la colle formée fragmentés par vapeur sont refroidis jusqu'à une température en dessous de 120 °C avant granulage.

12. Procédé selon l'une quelconque des revendications précédentes, dans lequel les granulés noirs de bois dur ont une taille dans la direction perpendiculaire à la direction longitudinale de 5 mm à 15 mm.

13. Procédé selon l'une quelconque des revendications précédentes, dans lequel les granulés noirs de bois dur ont une masse volumique de 700 kg/m$^3$ à 1200 kg/m$^3$.

14. Utilisation d'une source de colle à base de bois pour réduire la consommation d'énergie pendant le granulage de matériau de bois dur fragmenté par vapeur en granulés noirs, dans laquelle la source de colle à base de bois est combinée au matériau de bois dur avant explosion à la vapeur.

15. Utilisation d'une source de colle à base de bois pour augmenter l'intégrité structurale de granulés noirs de bois dur fragmentés par vapeur, dans laquelle la source de colle à base de bois est combinée au matériau de bois dur avant explosion à la vapeur.

Press roll

Wood material

Die channel

velocities
in die channel
(uniform profile over radius)

Surface layer binds to pellet

Strong low dust pellet

# Figure 1

Press roll

Wood material

Die channel

tear forces close to pellet
surface during formation

velocities
in die channel
(distorted profile over radius)

Surface layer not bound to pellet

Weak dusty pellet

Figure 2

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013191897 A1
- WO 2015185751 A1
- WO 2017089648 A1
- EP 3205707 A1
- US 1578609 A
- WO 2017089648 A

**Non-patent literature cited in the description**

- **BISWAS et al.** Steam pretreatment of Salix to upgrade biomass fuel for wood pellet production. *Fuel Processing Technology,* 2011, vol. 92, 1711-1717
- Biosynthesis and Biodegradation of Wood Components. Elsevier, 2012, 51-60
- **AARUM, I. et al.** *ACS Omega,* 2018, vol. 3, 4924-4931
- **CHORNET, E. ; OVEREND, R.** Phenomenological kinetics and reaction engineering aspects of steam/aqueous treatments. *Steam Explosion Techniques: Fundamentals and Industrial Applications,* 1991, 21-58